# EUROPÄISCHE PATENTSCHRIFT

(11) **EP 1 165 444 B1**
(45) Veröffentlichungstag und Bekanntmachung des Hinweises auf die Patenterteilung: **23.07.2003**
(21) Anmeldenummer: 00915124.2
(22) Anmeldetag: 01.03.2000
(51) Int. Cl.: C02F 1/50, A01K 63/04

(54) **VERWENDUNG VON PORPHYRINDERIVATEN IN AQUARIEN**
UTILIZATION OF PORPHYRIN DERIVATIVES IN AQUARIA
UTILISATION DE DERIVES DE PORPHYRINE DANS DES AQUARIUMS

(30) Priorität: 10.03.1999 DE 19910561
(43) Veröffentlichungstag der Anmeldung: 02.01.2002
(73) Patentinhaber: DPC d.o.o., 6000 Koper (SI)
(72) Erfinder: JORI, Giulio, I-35100 Padova (IT)
(74) Vertreter: Reniero, Cirillo Silvano
(86) Internationale Anmeldenummer: DE0000588
(87) Internationale Veröffentlichungsnummer: WO00053531

(56) Entgegenhaltungen:
- EP-A- 0 891 977
- WO-A-96/05862
- WO-A-97/29636

## Beschreibung

Die vorliegende Erfindung betrifft die Verwendung von Porphyrinderivaten zur Eindämmung des Algenwachstums und zur Bekämpfung bakterieller Keime in Aquarien.

Aufgrund des steigenden Bedarfs an unbelastetem Wasser bei einem stagnierenden oder sinkenden Angebot an natürlichen Quellen hat die Entwicklung von Verfahren zur Wasseraufbereitung in den letzten Jahrzehnten zunehmend an Bedeutung gewonnen. So sind bereits zahlreiche Verfahren bekannt, mit deren Hilfe z.B. eine bakterielle Kontamination des Wassers ausgeschlossen werden soll. Zur Bereitstellung von Trinkwasser kommen häufig starke Oxidationsmittel wie Hypohalogenite oder Permanganat zum Einsatz. Daneben gewinnen Verfahren, wie die Wasserbehandlung mit Ozon oder UV-Strahlung an Bedeutung, die verhindern sollen, daß die Qualität des Wassers durch eingebrachte Chemikalien nachteilig beeinflußt wird.

Solche Verfahren, die meist nur in großem Maßstab mit erheblichem technischen Aufwand durchführbar sind, werden jedoch den Bedürfnissen der Aquaristik, die besondere Anforderungen an die angewandten Wasseraufbereitungsmethoden stellt, im allgemeinen nicht gerecht. Während bei konventionellen Methoden, die das behandelte Wasser möglichst vollständig von vorhandenen Mikroorganismen befreien sollen, die Möglichkeit einer Nachbereitung des Wassers vor der Zuführung zum Verbraucher gegeben ist, ist für die Anwendung im Aquarium ein Mittel nötig, das die kontinuierlich und in situ angewandt werden kann, ohne sich schädlich auf Fauna und Flora auszuwirken. Im allgemeinen dienen Filteranlagen zur Reinhaltung des Aquarienwassers, wobei durch die dabei zum Einsatz kommenden Filter überwiegend partikuläre Verunreinigungen aus dem Wasser entfernt werden (mechanische Filterung). Zusätzlich werden oft chemische Filter in Form von Ionenaustauschern angewandt, um die ionische Zusammensetzung des Wassers zu kontrollieren. Selbst durch die Verwendung weiterer, chemisch wirksamer Filtermassen, wie z.B. Aktivkohle, kann jedoch das Auftreten und die Verbreitung bakterieller Kontaminanten nicht immer wirksam verhindert werden.

Durch die Kontrolle der Wasserqualität im Aquarium kann zum einen das Wachstum von Algen verhindert werden, zum anderen kann der Entstehung von Krankheiten bei den Fischen vorgebeugt werden. Eine wirksame Möglichkeit der Ausbreitung von Krankheitserregern frühzeitig entgegenzuwirken ist insbesondere bei bakteriell bedingten Fischkrankheiten, wünschenswert, da medikamentöse Behandlungsmethoden bei empfindlichen Fischbeständen nicht immer zum gewünschten Erfolg führen. Es sind zahlreiche bakterielle Pathogene in Wasser nachgewiesen worden, einschließlich gram-positiver Stäbchen und Kokken, Aeromonaden, Mykobakterien, gram-negative Stäbchen, Vibrios, und Pseudomo naden. Der gezielte Einsatz von antibiotisch wirksamen Medikamenten gegen solche Bakterien kann erst nach dem Auftreten erster Krankheitssymptome erfolgen und bedingt zusätzlich die genaue Identifikation des Erregers. Einer Ausbreitung der Erkrankung kann zu diesem Zeitpunkt kaum mehr wirksam verhindert werden.

Zur Anwendung in einem verwandten Bereich, der Behandlung von Wasser in Fischzuchtanlagen, offenbart DE-A-196 06 081 ein Verfahren, bei dem Photosensibilisatoren zum Entkeimen des Wassers eingesetzt werden. Allerdings wird hier ein Kontakt der Fische mit den Sensibilisatoren unter erheblichem Aufwand vermieden, indem das Wasser zur Sterilisation in einen getrennten Behälter gebracht, dort bestrahlt und anschließend in die Fischbecken zurückgeführt wird.

Der vorliegenden Erfindung liegt damit die Aufgabe zugrunde, ein Mittel bereitzustellen, mit dem Algen und bakterielle Keime in Aquarien ohne zusätzlichen apparativen Aufwand bekämpft werden können.

Diese Aufgabe wird erfindungsgemäß gelöst, indem mindestens ein Photosensibilisator der Tetrapyrrol- und/oder Tetrazaapyrrolreihe, der mindestens eine positive Ladung trägt, in das Wasser eingebracht und elektromagnetischer Strahlung, vorzugsweise Licht, ausgesetzt wird. Die genannten Verbindungen können, obwohl sie z.B. auch als Fraßgifte für Insekten bekannt sind, direkt dem Aquariumwasser zugegeben werden, ohne den Fisch- und Pflanzenbestand zu beeinträchtigen.

Aufgrund ihrer Fähigkeit, bei Bestrahlung die Bildung angeregter Moleküle zu katalysieren, können durch Verwendung solcher Photosensibilisatoren im Aquarienwasser ein- oder mehrzellige Algen oder Bakterien vorteilhaft an der Ausbreitung im Aquarium gehindert werden.

Durch die erfindungsgemäße Verwendung der Sensibilisatoren können gram-positive wie auch gram-negative Bakterien wirksam bekämpft werden. Insbesondere besitzt die Methode jedoch gegenüber Alternativverfahren den Vorteil, daß gram-negative Bakterien, die gegenüber zahlreichen anderen Chemikalien resistent sind, mit Hilfe der Photosensibilisatoren äußerst wirksam bekämpft werden können.

Als "Photosensibilisatoren" werden hierin Verbindungen verstanden, die elektromagnetische Strahlung, vorzugsweise sichtbares Licht, absorbieren und die Bildung von Radikalen und/oder Singulett-Sauerstoff aus Triplett-Sauerstoff unter Einfluß der Strahlung katalysieren können. Für den Einsatz in der vorliegenden Erfindung kommen Tetrapyrrol- und/oder Tetraazapyrrolverbindungen in Betracht, die mindestens einen positiv geladenen Substituenten enthalten (kationische Photosensibilisatoren). Die Art der Substituenten am Makrozyklus ist für die photochemischen Eigenschaften der Photosensibilisatoren von untergeordneter Bedeutung; sie beeinflussen im wesentlichen dessen Löslichkeitseigenschaften. Durch gezieltes Einführen von Substituenten können dem Photosensibilisator somit die gewünschten Löslichkeitseigenschaften unter Beibehaltung der photochemischen Eigenschaften der Ausgangsverbindung verliehen werden. Dem Fachmann steht bereits eine Vielzahl an gewerblich erhältlichen Verbindungen, die für den vorliegenden Zweck geeignet sind, zur Verfügung.

Wenn ein Photosensibilisator der oben genannten Art, vorzugsweise mit Licht, bestrahlt wird, entfaltet er seine antibakterielle Wirkung über die Aktivierung von Sauerstoff und/oder die Förderung von Vorgängen, an denen Radikale beteiligt sind. Vorzugsweise wird eine Strahlung mit einem Spektrum in dem Bereich von ca. 350-900 nm eingesetzt.

Die erfindungsgemäße Anwendung der Photosensibilisatoren zeigt gute Wirksamkeit bei der Bekämpfung einer Vielzahl gram-negativer Bakterien. Typische Beispiele für gram-negative Bakterien, die rasch und effizient durch die Bestrahlung mit sichtbarem Licht in Anwesenheit von kationischen Photosensibilisatoren inaktiviert werden, umfassen Escherichia coli, Pseudomonas aeroginosa und Vibrio anguillarum. Andererseits können mit Hilfe solcher Sensibilisatoren auch gram-positive Bakterien, wie Staphylokokken und Streptokokken inaktiviert werden. Die für die antibakterielle Aktivität erforderliche positive Ladung kann durch unterschiedliche Substituenten in den Makrozyklus eingeführt werden.
Bevorzugte Substituenten, mit deren Hilfe die positive Ladung in das Molekül eingeführt werden kann, tragen eine quartäre Ammoniumgruppe oder einen Heterozyklus, der ein positiv geladenes Stickstoffatom umfaßt.
Besonders bevorzugte Beispiele von Substituenten sind solche, die mindestens eine Trialkylammoniumgruppe enthalten. Weiterhin werden bevorzugt N-Alkyl-pyridinium-, N,N-Dialkyl-piperaziniumoder N,N-Dialkylpiperidiniumderivate als positiv geladene Substituenten verwendet. Die Anzahl der positiv geladenen Substituenten liegt vorzugsweise im Bereich von 1 bis 4. Die positive Ladung des Makrozyklus kann durch Anionen, wie beispielsweise Halogenidionen oder Tosylat neutralisiert werden.

Substituenten und Substituentenklassen, die als Träger einer positiven Ladung in der vorliegenden Erfindung geeignet sind, werden in der folgenden Abbildung beispielhaft illustriert:

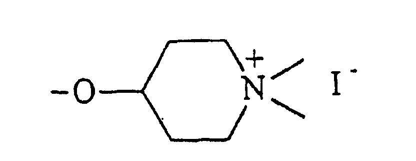

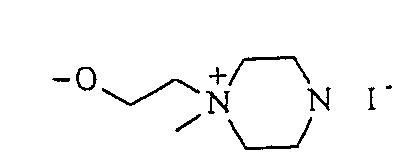

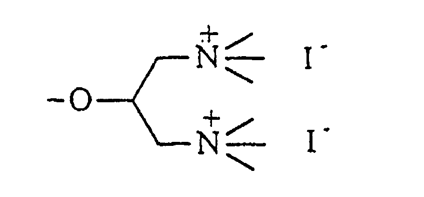

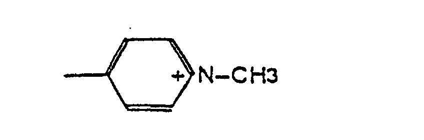

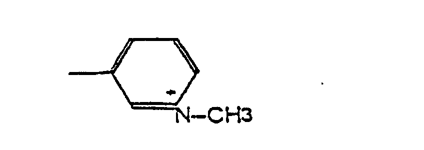

Als Photosensibilisatoren kommen bevorzugt Verbindungen aus der Gruppe der Bacteriochlorine, Chlorine, Porphyrine, Phthalocyanine und Naphthalocyanine zum Einsatz, die seit langem bekannt und ausführlich in der Literatur beschrieben sind. Eine Vielzahl solcher Verbindungen ist gewerblich erhältlich. Auch Techniken zum Einführen des bzw. der die positive Ladung tragenden Substituenten in die aufgeführten Makrozyklen sind dem Fachmann geläufig und werden z.B. in K. M. Smith "Porphyrins and Metalloporphyrins", Elsevier Publishing Co. (1975), 29-61 detailliert beschrieben.

Das Grundgerüst der Porphyrine, Bacteriochlorine, Chlorine, Phthalocyanine und Naphthalocyanine wird durch die folgenden Strukturformeln wiedergegeben:

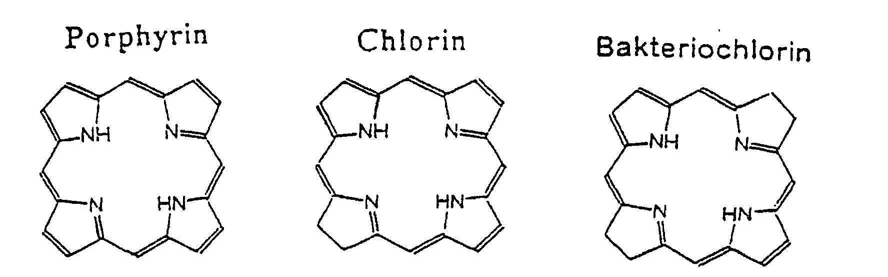

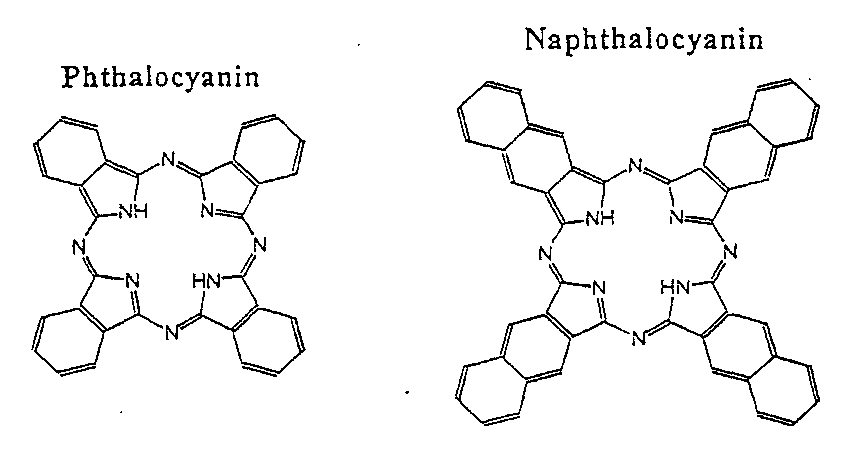

Neben den ladungstragenden Gruppen können die in der vorliegenden Erfindung zum Einsatz kommenden Porphine, Bacteriochlorine, Chlorine, Phthalocyanine und Naphthalocyanine weitere Substituenten tragen.

Besonders gute antibakterielle Wirkungen entfalten alle oben genannten Photosensibilisatoren, wenn sie mindestens zwei positive Ladungen im Molekül tragen, wobei es besonders vorteilhaft ist, wenn die zwei positiven Ladungen in den Mesopositionen vorliegen, so daß es zu einer asymmetrischen Ladungsverteilung im Molekül kommt. Jedoch zeigt ein Molekül mit einer einzigen positiven Ladung bereits antibakterielle Aktivität.
Lipophile Substituenten können die inhibierende Wirkung der Sensibilisatoren steigern, indem sie deren Affinität zu Zellmembranen erhöhen. Bevorzugte Reste, die in cytoplasmatische Membranen eindringen können, sind Alkylketten mit einer Länge von 4 bis 14, besonders bevorzugt 8-12 Kohlenstoffatomen. Solche Alkylreste können vorteilhaft als Substituenten am Stickstoffatom eines Pyridyliumsubstituenten, eines Piperazinyliumsubstituenten oder eines Piperidinyliumsubstituenten in das Grundgerüst der Sensibilisatoren eingebracht werden.

Bacteriochlorine, Chlorine, Porphyrine, Phthalocyanine und Naphthalocyanine können eine große Anzahl verschiedener Metallionen im Zentrum des Makrozyklus binden, wobei jeweils nur ein Ion gleichzeitig gebunden werden kann. Das Metallion wird an die vier Stickstoffatome der Pyrrolringe über koordinative Bindungen gebunden, wobei Hybridelektronenorbitale an der Bindung beteiligt sind.

Wichtige photophysikalische Parameter, die in die sensibilisatoraktivität der genannten Moleküle bestimmen, sind die Quantenausbeute und die Lebensdauer des niedrigsten angeregten Triplettzustands sowie die Quantenausbeute der Singulett O₂-Erzeugung. Diese Daten sind für viele der Photosensibilisatoren aus Tabellenwerken erhältlich, können jedoch von Fachmann auch selbst bestimmt werden. So ist der erste Parameter beispielsweise durch Laser-Flash-Photolyse und diffusive Reflektanz ermittelbar. Diese Messungen erlauben die Auswahl eines Photosensibilisators, dessen angeregter Zustand eine Lebensdauer besitzt, die groß genug ist, um die Reaktion mit Sauerstoff im Grundzustand zu ermöglichen. Die Effizienz der Sauerstoffumwandlung zu ¹O₂ wird durch Bestimmung der Lumineszenzemission im nahen Infrarotbereich von ¹O₂ ermittelt, wobei ein stickstoffgekühlter Ge-Detektor verwendet wird. Weiterhin kann die Reaktionskonstante der Reaktion des Photosensibilisators mit Sauerstoff gegenüber der Reaktionskonstante mit anderen Substraten (z.B. ungesättigten Lipiden, Steroiden, aromatischen oder schwefelhaltigen Aminosäuren) ermittelt werden, um die Selektivität der ¹O₂-Erzeugung zu ermitteln. Besonders bevorzugt für den Einsatz im erfindungsgemäßen Verfahren sind solche Photosensibilisatoren, die ausschließlich ¹O₂ erzeugen.

Der durch die Bestrahlung der Photosensibilisatoren erzeugte Singulettsauerstoff (¹O₂) entsteht durch elektronische Anregung von normalem Sauerstoff und besitzt eine Lebensdauer von wenigen Mikrosekunden in mit Luft äquilibriertem Wasser. Er kann ca. 15 mm weit diffundieren, bevor er deaktiviert wird und wirkt aufgrund seiner hohen Reaktivität inaktivierend auf Mikroorganismen.

Die Photosensibilisatoren können zur Aufrechterhaltung der Wasserqualität direkt dem Aquariumwasser zugegeben werden, wobei ihre Konzentration zwischen 1 und 30 µmol/l, bevorzugt zwischen 5 und 15 µmol/l liegen sollte. Wird dieser Konzentrationsbereich eingehalten, so können toxische Einflüsse der Moleküle auf die Aquarienfauna und -flora ausgeschlossen werden. Eine Beeinträchtigung der Gesundheit der Fische durch die Chemikalien tritt überraschenderweise nicht auf.

Zur Aufrechterhaltung der wirksamen Konzentration im Aquarium muß die Zugabe der Photosensibilisatoren trotz ihrer geringen Abbaurate in wäßrigen Lösungen regelmäßig wiederholt werden. Zu diesem Zweck besteht aufgrund der guten Stabilität der angewandten Moleküle in wäßriger Lösung z.B. die Möglichkeit, Konzentrate herzustellen, die der jeweiligen Aquariengröße angepaßt sind und so vom Verbraucher ohne zusätzlichen Aufwand eingesetzt werden können. Weiterhin ist bei der Wahl eines geeigneten wasserlöslichen Trägermediums auch die verzögerte Freisetzung in das Trägermaterial eingelagerter Sensibilisatoren ein geeigneter Weg zu ihrer Anwendung im Aquarien. Da die Sensibilisatoren aufgrund ihrer hohen Neigung zur Komplexbildung leicht an unterschiedlichen Materialien, wie z.B. Ionenaustauschern, Sand, Zeolithen, Aktivkohle, aber auch an Torf adsorbiert werden, wird ihre Konzentration durch den Einsatz herkömmlicher Filteranlagen zur Entfernung partikulärer Verunreinigungen ständig reduziert.
Auf diese Weise wird gleichzeitig einer Anreicherung des Sensibilisators, und damit einer potentiellen Schädigung des Fischbestandes ausgeschlossen.

Bei einer besonders bevorzugten Ausführungsform werden mehrere verschiedene Photosensibilisatoren gleichzeitig bei der Wasserbehandlung eingesetzt. Dabei ist es insbesondere von Vorteil, wenn die verschiedenen Photosensibilisatoren so ausgewählt werden, daß das Spektrum der zur Beleuchtung des Aquariums eingesetzten Lichtquellen zur Photosensibilisierung ausgenutzt wird. Es können Verbindungen ausgewählt werden, die verschiedene Absorptionsmaxima besitzen, beispielsweise eine Verbindung mit einem Absorptionsmaximum bei ca. 400 nm, eine Verbindung mit einem Absorptionsmaximum bei ca. 500 nm und eine weitere Verbindung mit einem Absorptionsmaximum bei ca. 600 nm. Eine solche Kombination von Photosensibilisatoren mit unterschiedlichen Absorptionsmaxima hat den Vorteil, daß das Licht besonders effizient ausgenutzt werden kann.

Weiterhin ist es möglich, die Photosensibilisatoren zu immobilisieren und sie als Teil einer festen Matrix in das Aquarium einzubringen. Als Träger sind insbesondere wasserunlösliche Polymere bevorzugt, die die Sensibilisatormoleküle kovalent binden. Auf diese Weise kann z.B. ein Träger auf Polymerbasis bereitgestellt werden, der den Photosensibilisator in einer Menge enthält, die der Größe und dem Inhalt des Aquariums angepaßt ist. Er wird zur erfindungsgemäßen Verwendung direkt in das Aquarium eingebracht.

Beispiele für Verbindungen, die für die Zwecke der vorliegenden Erfindung genutzt werden können, sind im folgenden aufgeführt: 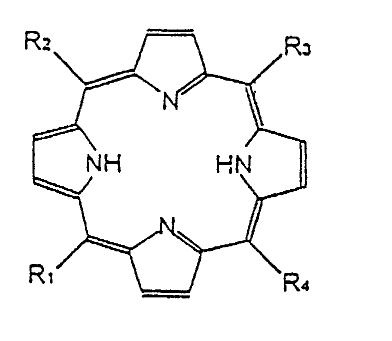
Meso-tetra(4-N-methyl-pyridyl)porphin: R₁, R_{2,} R_{3,} R₄ = 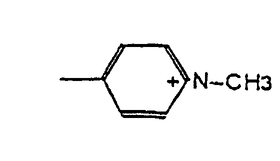
Meso-tetra(3-N-methyl-pyridyl)porphin: R₁, R₂, R₃, R₄= 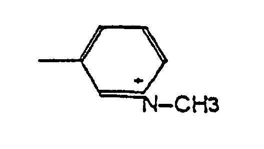
Meso-tri(4-N-methyl-pyridyl)monophenylporphin: R₁, R₂, R₃= 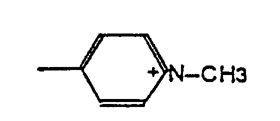 R₄ = 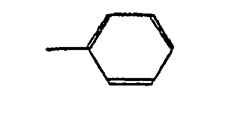
Meso-di(N-methyl-4-pyridyl)diphenylporphin: R₁, R₂ = 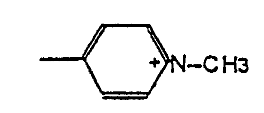 R₃, R₄ = 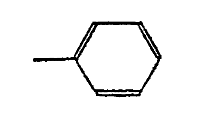
Meso-mono(N-methyl-4-pyridyl)triphenylporphin: R₁ = 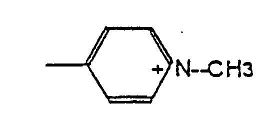 R₂, R₃, R₄ =

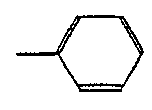

Als weitere Verbindungen neben Meso-tetra(N-4-methyl-pyridyl)-porphin (als T₄MPyP abgekürzt) des Porphyrintyps können auch Verbindungen zur Anwendung kommen, bei denen die Länge der am Stickstoffatom des Pyridyliumrests gebundenen Alkylgruppe auf bis zu 12 Kohlenstoffatome erhöht wurde, wie beispielsweise Mesotetra(N-4-ethyl-pyridyl)porphin (T₄EPyP) Meso-tetra(N-3-ethylpyridyl)porphin (T₃EPyP) oder Meso-tetra(N-4-pentyl-pyridyl)-porphin (T₄PPyP).

Zur Illustration von Verbindungen, die zwei positive Ladungen in meso-Stellung tragen, kann cis-Di-(N-methyl-pyridyl)-diphenyl)-diphenyl-phorphin genannt werden.

## Patentansprüche

1. Verwendung von Photosensibilisatoren der Tetrapyrrolund/oder Tetraazapyrrolreihe, die mindestens eine positive Ladung an einem Substituenten tragen, zur Bekämpfung von bakteriellen Keimen und Algen in Aquarien, wobei die Photosensibilisatoren direkt dem Aquariumwasser zugegeben wird, ohne Fische oder Pflanzen vorher zu entfernen.

2. Verwendung nach Anspruch 1, **dadurch gekennzeichnet, daß** der Photosensibilisator ausgewählt ist aus Bakteriochlorinen, Chlorinen, Porphyrinen, Phthalocyaninen und Naphthalocyaninen.

3. Verwendung nach einem der Ansprüche 1 oder 2, **dadurch gekennzeichnet, daß** der Photosensibilisator ein Porphyringerüst aufweist.

4. Verwendung nach einem der Ansprüche 1 bis 3, **dadurch gekennzeichnet, daß** der Photosensibilisator 2 bis 4 positive Ladungen trägt.

5. Verwendung nach einem der Ansprüche 1 bis 3, **dadurch gekennzeichnet, daß** der Photosensibilisator 2 positive Ladungen in meso-Position trägt.

6. Verwendung nach einem der Ansprüche 1 bis 5, **dadurch gekennzeichnet, daß** der Photosensibilisator mindestens einen lipophilen Substituenten trägt.

7. Verwendung nach Anspruch 6, wobei der liphophile Substituent ein Alkylrest mit 4 bis 12 Kohlenstoffatomen ist.

8. Verwendung nach einem der Ansprüche 1 bis 7, **dadurch gekennzeichnet, daß** der Photosensibilisator in einer Konzentration von 1 bis 30 µmol/l vorliegt.

9. Verwendung nach einem der Ansprüche 1 bis 8, **dadurch gekennzeichnet, daß** Photosensibilisatoren mit unterschiedlichen Absorptionsspektren gleichzeitig eingesetzt werden, so daß das gesamte Spektrum des sichtbaren Lichts zur Photosensibilisierung ausgenutzt wird.

## Claims

1. Use of photosensitizers of the tetrapyrrole and/or tetraazapyrrole series which have at least one positive charge on a substituent for controlling bacterial microbes and algae in aquaria, where the photosensitizers are added directly to the aquarium water without previously removing fish or plants.

2. Use according to claim 1, **characterized in that** the photosensitizer is selected from bacteriochlorins, chlorins, porphyrins, phthalocyanines and naphthalocyanines.

3. Use according to either of claims 1 or 2, **characterized in that** the photosensitizer has a porphyrin structure.

4. Use according to any one of claims 1 to 3, **characterized in that** the photosensitizer has 2 to 4 positive charges.

5. Use according to any one of claims 1 to 3, **characterized in that** the photosensitizer has 2 positive charges in the meso position.

6. Use according to any one of claims 1 to 5, **characterized in that** the photosensitizer has at least one lipophilic substituent.

7. Use according to claim 6, where the lipophilic substituent is an alkyl radical having 4 to 12 carbon atoms.

8. Use according to any one of claims 1 to 7, **characterized in that** the photosensitizer is present in a concentration of from 1 to 30 µmol/l.

9. Use according to any one of claims 1 to 8, **characterized in that** photosensitizers having different absorption spectra are employed simultaneously, so that the entire spectrum of visible light is utilized for the photosensitization.

## Revendications

1. Utilisation de photosensibilisants de la catégorie des tétrapyrrols et/ou tétraazapyrrols, qui portent au moins une charge positive sur un substituant, pour lutter contre les germes bactériens et les algues dans les aquariums, les photosensibilisants étant directement ajoutés à l'eau de l'aquarium sans avoir à retirer au préalable les poissons ou les plantes.

2. Utilisation selon la revendication 1, **caractérisée en ce que** le photosensibilisant est choisi parmi les bactériochlorines, les chlorines, les porphyrines, les phtalocyanines et les naphtalocyanines.

3. Utilisation selon l'une quelconque des revendications 1 ou 2, **caractérisée en ce que** le photosensibilisant présente un squelette de porphyrine.

4. Utilisation selon l'une quelconque des revendications 1 à 3, **caractérisée en ce que** le photosensibilisant porte 2 à 4 charges positives.

5. Utilisation selon l'une quelconque des revendications 1 à 3, **caractérisée en ce que** le photosensibilisant porte 2 charges positives en position méso.

6. Utilisation selon l'une quelconque des revendications 1 à 5, **caractérisée en ce que** le photosensibilisant porte au moins un substituant lipophile.

7. Utilisation selon la revendication 6, où le substituant lipophile est un radical alkyle ayant de 4 à 12 atomes de carbone.

8. Utilisation selon l'une quelconque des revendications 1 à 7, **caractérisée en ce que** le photosensibilisant est présent en une concentration allant de 1 à 30 µmol/l.

9. Utilisation selon l'une quelconque des revendications 1 à 8, **caractérisée en ce que** des photosensibilisants ayant des spectres d'absorption différents sont mis en oeuvre simultanément de sorte que le spectre total de la lumière visible soit utilisé pour la photosensibilisation.
